# EUROPEAN PATENT APPLICATION

(11) **EP 2 277 740 A1**
(43) Date of publication of application: **26.01.2011**
(21) Application number: 10169988.2
(22) Date of filing: 19.07.2010
(51) Int. Cl.: B60P 7/15, B65D 19/44

(54) **Device for fixing objects**

(30) Priority: 22.07.2009 NL 2003262
(71) Applicant: BM Holding BV, 5571 SP Bergeijk (NL)
(72) Inventor: van Leeuwen, Hendrikus Antonius, 5571 TJ, Bergeijk (NL)
(74) Representative: van Westenbrugge, Andries

(57) **Abstract**

The invention relates to a device for fixing objects with respect to one another. The device comprises a carrier (8) with a bearing surface, on which objects can be arranged in a row. The device is also provided with a fixing system. The fixing system comprises a first supporting member (3), a last supporting member (5) which is positioned at a distance from the first supporting member (3), and a number of spacing elements (4) which can be positioned between the first and the last supporting member. The spacing elements (4) can be displaced with respect to one another and with respect to the carrier (8) in a direction of displacement parallel to the bearing surface. In this case, intermediate spaces can be formed in which objects can be accommodated. The spacing element prevents damage to the objects. The fixing system also comprises a fixing unit (20) for fixing the objects. The invention also relates to a vehicle provided with such a device. The invention also relates to a method for fixing objects.

## Description

The invention relates to a device for fixing objects with respect to one another, comprising a carrier with a bearing surface. The invention also relates to the use of such a device.

The invention also relates to a vehicle provided with such a device.

The invention also relates to a method for fixing objects with respect to one another.

The transportation of objects, such as for example elongate profiled sections, casings or doors, by means of a vehicle (lorry, train, trailer and the like) is generally known. These objects have to be protected in order to prevent damage during transportation. In particular, damage of the outer surface of the objects has to be prevented, since this can adversely affect the properties of the object. Damage to the outer surface may, for example, result in corrosion and may also affect the aesthetic qualities of the object, leading to a loss of value of the object. Therefore, the objects are packaged and fixed securely before being transported. Packing is carried out using, for example, packaging material, such as for example paper, cardboard, plastic and/or other materials. The packaging material can be fitted securely around the object, for example by means of tape. The packaged objects are then arranged in a vehicle, such as for example a trailer, and fixed to a loading floor thereof by means of, for example, tensioning belts. The tensioning belts are securely tensioned around the objects and the vehicle and attached to the vehicle in order to prevent undesirable movements of the object. The object has to be fixed in such a manner that it can hardly move, if at all, since any movement can lead to collisions, as a result of which the object, and thus in particular the outer surface thereof, can be damaged. This is undesirable.

Fixing the objects by means of tensioning belts has the drawback that the fixing operation itself can result in damage to the object. This is due to the fact that the tensioning belts can cut slightly into the packaging of the object and thus still cause damage to the product.

In addition, the method of transportation generally has the disadvantage that it is time-consuming as all objects have to be packaged first, then have to be fixed on a vehicle, thereafter have to be released and removed from the vehicle and, finally, the packaging has to be removed again. This is relatively time-consuming and very expensive, partly due to the fact that a relatively large amount of packaging material is required. In addition, the packaging material has quite a large impact on the environment.

It is therefore an object of the invention to solve at least one of the abovementioned drawbacks or at least to reduce it.

To this end, the invention provides, according to a first aspect, a device for fixing objects with respect to one another according to Claim 1. The device comprises a carrier with a bearing surface, in which the carrier is configured such that the objects can be arranged thereon in a row, in which the device is also provided with a fixing system provided with: a first supporting member for placing a first object against; a last supporting member, positioned at a distance from the first supporting member, for placing a last object against; a number of spacing elements which can be positioned between the first and the last supporting member, in which the spacing elements can be displaced with respect to one another and with respect to the carrier in a direction of displacement parallel to the bearing surface in order to form a number of intermediate spaces on the carrier, in which the objects can be accommodated in the intermediate spaces, and in which the spacing element is configured such that it prevents damage to the objects during use of the device; a fixing unit for fixing the distance between the first and the last supporting member. By means of the device, it is possible to fix a number of objects in a simple manner. To this end, the objects can be fixed between a first and a last supporting member. The fixing unit ensures that the distance between the first and the last supporting member is fixed. By means of spacing elements, a number of intermediate spaces can be formed between the first and the last supporting member. The dimensions of each intermediate space can be determined separately, and can be adjusted, as desired, to the size of the object. Each object can be accommodated in a separate intermediate space. Placing the object in the intermediate space can be effected relatively quickly. Preferably, in each case one spacing element will be provided between two adjacent objects. The spacing element is configured such that it prevents damage to the objects. Therefore, the objects no longer have to be packaged, but can be fixed directly on the device in order then to be transported, for example. The spacing element may, for example, be a flexible tube made of rubber or plastic. The contact between the spacing element and the object thus prevents damage of the object. The spacing element produces a distance between two adjacent objects in such a manner that the objects do not touch one another, thus preventing damage to the objects. The fixing unit may be configured such that it ensures that the spacing elements and the objects which have been placed between the first and the last supporting member can no longer move. The spacing elements and the objects can be clamped between the first and the last supporting member, as it were. In use, the spacing elements can thus preferably bear against the object. By means of the device according to the invention, objects can be fixed on the device relatively quickly. Packing the objects is no longer required, since the spacing elements prevent damage to the objects. This makes the device according to the invention relatively environmentally friendly. Furthermore, no additional means, such as tensioning belts or ropes, are required in order to fix the objects. The objects can be fixed relatively firmly, as a result of which damage to objects due to the cargo moving about is prevented. In addition, the device is relatively simple and comprises relatively few parts. This makes the device relatively inexpensive and environmentally friendly.

The device is particularly suitable for fixing profiled sections (such as for example profiled sections which have been painted or treated in any other way), heating radiators, casings and/or casing parts, doors, various building materials, and/or other products which have to be protected, for example during transportation thereof. Obviously, the device can also be used for fixing other objects.

In one embodiment, the spacing elements are coupled to one another. Coupling the spacing elements to one another ensures that they can be attached to the device in a relatively simple manner. As a result thereof, the spacing elements are less easily lost. Coupling the spacing elements to one another also ensures that the spacing elements are always a maximum distance apart. The maximum distance is determined by the coupling means. Coupling ensures that the spacing elements are accessible to a user relatively quickly.

Preferably, the spacing elements are substantially coupled so as to be displaceable only in the direction of displacement. Coupling in the direction of displacement enables a maximum distance between the spacing elements. However, the spacing means can be moved towards one another in order to reduce the distance between spacing elements, and thus the size of an intermediate space. Displacement in a direction other than the direction of displacement is prevented.

It is possible to provide an accordion coupling system for coupling the spacing elements to one another. The accordion coupling system comprises a sawtooth-like structure of relatively rigid, preferably elongate elements. The accordion coupling system enables spacing elements to be arranged at any intermediate position. In this case, there is also a maximum distance between the spacing elements. The accordion coupling system is relatively sturdy and resistant to wear.

In one embodiment, the accordion coupling system can be produced as follows. The spacing element may, on its underside, be connected to an elongate base, which extends substantially at right angles to the spacing element, in which a receiving space is provided near a first end of the base, and in which, near a second end which is situated opposite the first end, a coupling element is provided which is configured to cooperate with the receiving space of an adjacent spacing element in order to couple the spacing elements to one another, and thus to form the accordion coupling system. In this manner, a modular accordion coupling system is produced. The system consists of modular coupling parts which can be coupled to one another and which a user can add or remove as desired in order to expand or reduce the system in size.

In one embodiment, the device comprises a substantially rectangular holder with a bottom and peripheral walls, in which the carrier and the bearing surface are formed, at least partially, by an upper side of the peripheral walls, with the first supporting member being provided near a short side of the rectangular holder, in which the second supporting member can be displaced along a long side of the holder and is provided with the fixing unit for fixing the distance between the first and the last supporting member, and in which the number of spacing elements is displaceably accommodated in a space which is surrounded by the bottom and peripheral walls. Such an embodiment is relatively compact and requires relatively few parts. The spacing elements are accommodated in the holder in a relatively protected manner. The bearing surface is placed higher with respect to the spacing elements. As a result thereof, the spacing elements can still move freely when fixing the objects. This ensures a minimum intermediate space between spacing elements.

Preferably a further fixing system is provided which is arranged at a distance from the first fixing system. The fixing system comprises the supporting members, the spacing elements and the fixing unit. By using a number of fixing systems, objects can be gripped at a number of places. This enables relatively long objects to be transported, and for these to be fixed in two places in each case. Even large, irregularly shaped objects, such as for example L-shaped objects, can be fixed in this manner.

The further fixing system can be arranged in such a manner that the direction of displacement of the spacing elements of the further fixing system is substantially parallel to the direction of displacement of the spacing elements of the first fixing system. This embodiment is particularly suitable for fixing elongate objects. Especially profiled sections for, for example, casings can be fixed in a simple and safe manner. Other elongate objects, such as for example girders, can likewise be fixed in a simple and safe manner.

In one embodiment, the spacing element comprises at least one shaping element for modifying the shape of the spacing element to the object to be fixed. This can be used to match the shape of the spacing element to the shape of the object to be fixed. This is particularly advantageous when fixing objects having irregular cross sections. The shaping element can lead to improved support of the object when it is in the fixed state.

The shaping element can be detachable from the spacing element, thus producing a flexible device.

Preferably, the spacing elements are displaceable in the longitudinal direction of the carrier. This embodiment is relatively compact.

In one embodiment, the spacing element is provided with a chassis fitted with at least one wheel, in which the chassis is displaceably accommodated in a guide element comprising at least one running surface for guiding the wheel therein. In this manner, the spacing element can be displaced in a particularly easy and simple manner.

It is possible to provide attachment means for attaching the guide element to a ceiling part, in which the spacing element is suspended from the chassis. Such an embodiment is particularly suitable for fixing relatively large objects. The spacing element can be fitted in a relatively simple manner. The spacing element is suspended from the ceiling. The user can reach and operate the spacing element in a relatively simple manner.

In a further embodiment, the device is provided with a storage space for temporarily storing the spacing elements therein. The spacing elements which are not required can thus be stored in a simple manner, and are thus not in the way. Moreover, this creates additional space for the user to operate the device.

In order to be able to transport the objects in a relatively simple manner, the device can be provided on its underside with at least one receiving space for accommodating carrying elements of a transport vehicle, such as a fork-lift truck. The device can also have dimensions which match the format of a pallet. The dimensions can match or correspond to the dimensions of the Euro-pallet format.

It is possible for the bearing surface to extend substantially vertically. In this manner, objects can be stacked on top of one another between two vertical supporting members which have been arranged at a distance from one another. However, it is preferable for the bearing surface to extend substantially horizontally. In this manner, the objects can be fixed in a row alongside one another on the bearing surface. This reduces the risk of damage to the object.

According to one aspect of the invention, it provides the use of a device according to the invention. By using the invention, objects can be fixed relatively quickly and easily. The advantages of using the device are already apparent from the above.

According to one aspect of the invention, a vehicle is provided for transporting a number of objects, comprising one or more devices according to the invention. Using a vehicle of such design, objects can be loaded relatively quickly and easily, due to the fact that the objects can be fixed relatively quickly. The objects can then also be transported relatively easily. Moreover, they can also be transported safely, since the objects are securely fixed and there is thus little risk of the objects becoming damaged.

Preferably, at least one device is positioned in a cargo space of the vehicle. The vehicle may, for example, be a lorry or a trailer. Other vehicles are also conceivable. Placing the device in a cargo space provides further protection of the objects against outside influences.

According to a further aspect of the invention, a method is provided for fixing at least two objects using a device according to the invention. The method comprises the following steps:
- displacing at least one first spacing element in such a manner that a first intermediate space is created between the first supporting member and the first spacing element, with the distance between the first spacing element and the first supporting member being chosen such that a first object can be accommodated in the first intermediate space;
- placing the first object in the first intermediate space, with the object being arranged so as to bear against the first supporting member;
- reducing the distance between the first spacing element and the first supporting member in such a manner that the first spacing element is arranged so as to bear against the object;
- forming a last intermediate space between the last supporting member and a last spacing element, with the distance between the last supporting member and the last spacing element being chosen such that a last object can be accommodated in the last intermediate space;
- placing the last object in the last intermediate space, with the last object being arranged so as to bear against the last spacing element;
- reducing the distance between the last supporting member and the last spacing element in such a manner that the last supporting member is arranged so as to bear against the object;
- fixing the distance between the last supporting member and the first supporting member for fixing the objects.

Using the method according to the invention, a number of objects can be fixed on a device relatively quickly and easily. Intermediate spaces can be formed relatively quickly. An object can readily be introduced into the latter, following which a spacing element can be pushed against the object in order thus to create a new intermediate space. Finally, the unit can be fixed to objects in a simple and quick manner. The objects can be clamped between the two supporting members as it were. Packing the objects is thus no longer necessary, since the spacing elements prevent the objects from becoming damaged, thus saving time and packaging material.

In one embodiment of the method, the first spacing element also serves as the last spacing element and the method is used for fixing two objects. In order to fix two objects, only one spacing element is required.

In another embodiment, the method comprises the following additional steps before the step of forming a last intermediate space:
- forming at least one additional intermediate space between the first intermediate space and the last intermediate space by arranging two spacing elements at a distance from one another;
- placing an additional object in the at least one additional intermediate space, with the additional object being arranged so as to bear against one of the two spacing elements;
- reducing the distance between the two spacing elements in such a manner that the spacing elements are arranged so as to bear against the object.

This method is mainly suited for fixing three or more objects. When fixing such a number of objects, in each case one object can be placed in an intermediate space between two spacing elements.

Below, some embodiments of the invention will be explained with reference to some figures, in which:
Fig. 1a shows a side view of a device;
Fig. 1b shows a top view of the device from Fig. 1a;
Fig. 1c shows a top view of the device from Figs. 1a and 1b, provided with objects;
Fig. 2 shows a detailed view of an embodiment of a fixing system;
Figs. 3a-b show detailed views of embodiments of a distance holder;
Fig. 4a shows a top view of an embodiment of the device;
Fig. 4b shows a side view of an embodiment of a distance holder;
Fig. 5 shows a perspective view of an embodiment of the device.

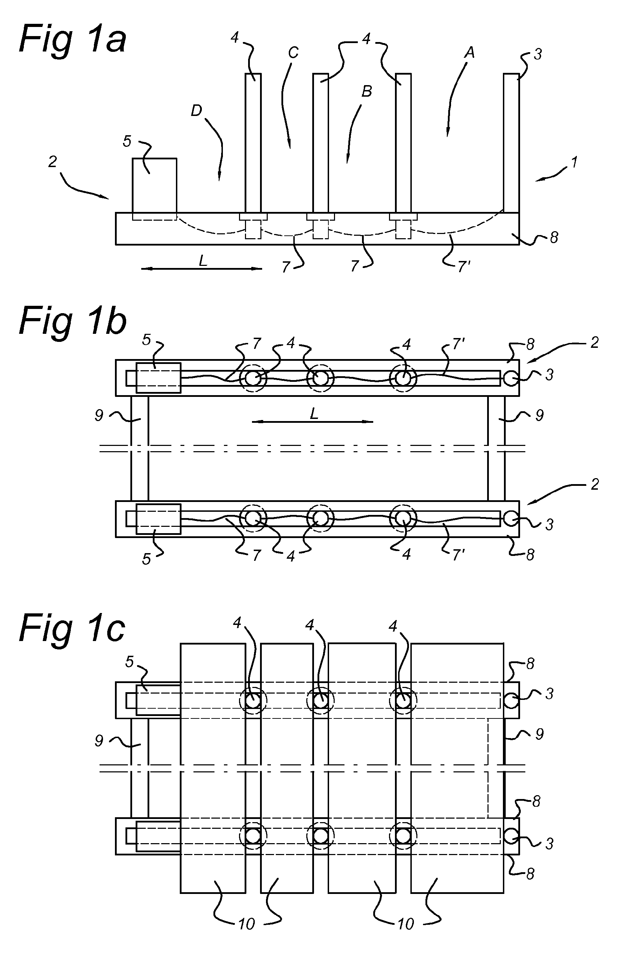

Fig. 1 shows a device 1 for fixing objects with respect to one another. The device 1 can, for example, be used for transporting objects in a simple manner. The objects can be placed relatively easily and quickly onto the device and are subsequently fixed. The objects are in this case fixed such that they are spaced apart relative to one another. Thus, the objects do not touch one another and cannot be damaged quickly. The device 1 may form part of a transport device, such as for example a trailer. In one embodiment, the device 1 forms part of a pallet, as will be described below.

Figs. 1a and 1b show a side view and a top view, respectively. Identical parts are denoted by the same reference numerals in the figures. As can be seen in Fig. 1b, the device 1 comprises two carriers 8 with a bearing surface. The carriers are arranged at a distance from one another. The carriers 8 are connected by two cross beams 9. Each carrier is provided with a fixing system 2. The fixing system 2 is configured for fixing objects on the device. The fixing system 2 comprises a first supporting member 3 and a last supporting member 5. The first supporting member 3 comprises a rod-shaped stop 3. The stop 3 is fixedly connected to the device 1. The supporting member 3 can be provided with a relatively soft outer surface. The last supporting member 5 comprises a block-shaped stop 5. The last supporting member 5 is displaceable in a longitudinal direction L of the device 1. The last supporting member 5 is, for example, slideably displaceable along a part of the carrier 8. In this way, the distance between the first supporting member 3 and the last supporting member 5 can be changed. The supporting member 5 can be fixed in order to fix the distance between the first 3 and the last supporting member 5.

A number of spacing elements 4 are provided between the first 3 and the last supporting member 5. In the illustrated embodiment, the spacing elements are rod-shaped. The spacing elements are preferably provided with a relatively soft outer surface. The spacing elements 4 extend upwards relative to the carrier 8 and the bearing surface. In the illustrated embodiment, the spacing elements extend substantially at right angles to the carrier 8 and the bearing surface. The spacing elements 4 are displaceable in a longitudinal direction L of the device. Intermediate spaces A-D are formed between two adjacent spacing elements 4. Objects can be accommodated in the intermediate spaces. The spacing elements 4 can be connected to one another by flexible connecting means 7, such as for example a rope or a chain. In the illustrated embodiment, the spacing elements 4 are also connected to the supporting members 3, 5. The flexible connecting means 7 keep the spacing elements 4 together, but nevertheless enable the spacing elements to be placed independently from one another. In this manner, the size of each intermediate space A-D can be adjusted as desired.

The operation of the device illustrated in Figs. 1a and 1b will be explained in more detail with reference to Fig. 1c. A number of objects 10 are placed on the device 1 illustrated in Fig. 1c. The objects are relatively elongate, and can, for example, be profiled sections or building materials. To this end, first of all, the last supporting member 5 is arranged at a sufficiently large distance from the first supporting member 3. Furthermore, the spacing elements 4 are also arranged at a sufficiently large distance from the first supporting member 3, so that a first intermediate space A is formed between the first supporting member 3 and the nearest spacing element 4. The dimensions of the first intermediate space A are such that the first object can readily be accommodated therein. The first object 10 is positioned on the carrier with a bottom side and placed against the first supporting member 3 by its side. The relatively soft outer surface of the first supporting member 3 ensures that the surface of the object does not become damaged. This is particularly advantageous when the surface of the object is relatively delicate, for example because it is provided with a special coating or paint.

After the first object 10 has been placed, the nearest spacing element 4 is arranged so as to bear against the object. Then, a new object can be placed next to the first object 10. To this end, it has to be ensured first that the intermediate space is sufficiently large by arranging the spacing elements 4 which have not yet been used at a sufficiently large distance from the object. Subsequently, the object 10 is placed in the intermediate space B. The object is placed on the device on its underside. One side of the object is placed against the spacing element 4. This spacing element 4 is therefore now placed between two objects and keeps the two objects apart. The objects are preferably not able to touch one another, so that the objects cannot be damaged.

The last object to be placed is placed into the intermediate space D between the last spacing element 4 and the last supporting member 5. This last object 10 is arranged so as to bear against the spacing element 4. Subsequently, all placed objects can be fixed. To this end, the last supporting member 5 is pushed against the last object. Thereafter, a fixing unit can be activated which fixes the distance between the first and the last supporting member 3, 5. The fixing unit can be configured so as to prevent a displacement of the last supporting member. If the first supporting member 3 is fixedly connected to the device, the fixing unit can fix the distance between the first supporting member and the last supporting member.

Fixing the distance ensures that the objects can no longer move with respect to one another, as a result of which the objects are securely fixed on the device. The spacing elements ensure that there is a distance between the objects, thus reducing the risk of the objects becoming damaged. The objects can be fixed relatively quickly and easily. The objects no longer need to be packaged, which means that packaging material is no longer required and no time has to be spent on packing and/or unpacking the objects. Thus, the use of the device according to the invention saves time and costs.

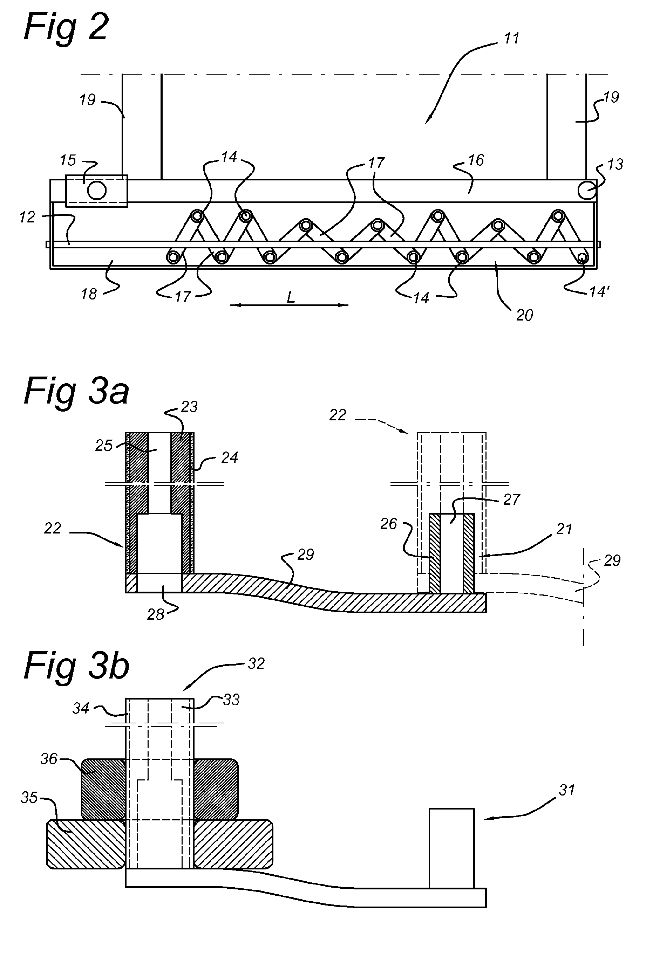

Fig. 2 shows an embodiment of the device 11, in which only a part of the device 11 is shown. A carrier 18 with a bearing surface 16, which carrier 18 is connected by two cross beams 19 to a further carrier (not shown), is shown. The carrier 18 is provided with a fixing system 20 which, in the illustrated embodiment, comprises an accordion coupling system. The fixing system 20 comprises a first supporting member 13 and a last supporting member 15. The supporting members are again preferably provided with a relatively soft outer surface. The last supporting member 15 is displaceable in a longitudinal direction L of the device 11. The last supporting member 15 can be fixed for fixing the distance between the first 13 and the last supporting member 15.

A number of spacing elements 14 are provided between the first 13 and the last supporting member 15. In the illustrated embodiment, the spacing elements are rod-shaped. The spacing elements are preferably provided with a relatively soft outer surface. The spacing elements 14 extend upwards with respect to the carrier 18 and the bearing surface 16. In the illustrated embodiment, the spacing elements extend substantially at right angles to the carrier 18 and the bearing surface 16. The spacing elements 14 are displaceable in a plane of the carrier 18, and in particular in a longitudinal direction L of the carrier 18. Intermediate spaces can be formed between two adjacent spacing elements 14 in order to accommodate objects therein.

In the illustrated embodiment, the spacing elements 14 are connected to one another by an accordion coupling system. The accordion coupling system will be described in more detail with reference to Fig. 3a, which shows a cross section of a modular coupling element 21 of the accordion system. The modular coupling element 21 comprises the spacing element 22. In the illustrated embodiment, the spacing element comprises a central part 23 which is surrounded on its outer side by an outer surface 24. In the central part, a cavity 25 may be present. The cavity 25 forms a receiving space 28 on the underside of the spacing element 22.

On its underside, the spacing element 22 is connected to an elongate base 29. The base 29 extends substantially at right angles to the spacing element 22. At one end of the base, a coupling element 26 is provided. The coupling element 26 is configured to cooperate with the receiving space 28 of a further spacing element 22 or modular coupling element 21. The coupling element extends substantially parallel to the spacing element 22. The coupling element extends upwards at a certain height with respect to the base 29. The height is preferably smaller than the height of the spacing element 22. The dimensions of the coupling element are preferably chosen such that the coupling element can be accommodated in the receiving space 28.

The coupling element may be a cylindrical element. The receiving space of the spacing element is preferably also cylindrical. The diameter of the coupling element is preferably chosen such that it matches the diameter of the receiving space. Preferably, an accurate or loose fit is used.

The base part preferably has an S-shaped cross section, such that an underside of the base part is in a higher position at the location of the holding part 28 than the underside of the base part at the location of the coupling element 26. In this manner, it is ensured that the spacing elements can readily move and that the displacement can take place substantially in the plane of the carrier.

The accordion coupling system ensures that the spacing elements 14 from Fig. 2 are held together, but at the same time also ensures that the spacing elements 14 can be displaced partially independently from one another in order to form intermediate spaces having the dimensions desired by the user. The user can thus, for example, adjust the distance between two spacing elements in a longitudinal direction L of the device, so that a product having certain dimensions can be accommodated in the intermediate space. The accordion system also comprises an attachment means 12 for attaching the spacing elements to the device. The accordion system and the attachment means ensure that the spacing elements are displaceable mainly in the plane of the carrier 18 and that displacement of the spacing elements in a direction at right angles to the plane of the carrier 18 is prevented.

The central part 23 and the outer surface 24 of the spacing element 22 from Fig. 3a may be made from the same material, but different materials are also conceivable. In one embodiment, the central part 23 is made from metal and the outer surface 24 is made from a relatively flexible material. The outer surface 24 may be made from a resilient material, so that objects which are fixed can less easily be damaged. The resilient material may, for example, be a plastic.

In the illustrated embodiment, the central part 23 and the outer surface 24 extend upwards at the same height with respect to the base part 29. However, it is readily possible for the central part 23 to extend upwards less far than the outer surface 24. The outer surface then has a greater height than the central part. This embodiment ensures that the outer surface 24 substantially comes into contact with the objects to be fixed. In particular when the outer surface 24 is made from a flexible, resilient material, this embodiment ensures that the objects can be fixed more forcefully. The relatively flexible outer surface 24 will deform during fixing of objects, as a result of which the friction force on the objects increases. As a result thereof, the objects will be able to be fixed securely, thus reducing or preferably even preventing the risk of the objects becoming detached from the device.

Fig. 3b shows a further embodiment of the modular coupling element 31 provided with a spacing element 32 with a central part 33 and an outer surface 24. As can be seen in Fig. 3b, the spacing elements can comprise at least one shaping element 35, 36. The shaping element 35, 36 ensures that the shape of the spacing element 34 can be adapted to the object to be fixed. This is particularly useful when fixing objects whose side wall is not straight, for example when fixing an object having an L-shaped cross section. The shaping element produces a closer connection of the spacing element to the object, thus enabling improved fixing. This also prevents the object becoming damaged.

The shaping element can be detachable from the spacing element. In the illustrated embodiment, two independent shaping elements 35, 36 are used. Naturally, it is likewise possible to use only one shaping element. It is also possible to use a large number of shaping elements.

The shaping elements are preferably disc-shaped bodies, such as for example reels. The reels may be made from a relatively flexible material. The material of the filling reels may be plastic. The hardness of the material may be adapted to the fragility of the objects to be fixed.

It will be clear to those skilled in the art that the use of shaping elements is not limited to the embodiment illustrated in Fig. 3b. It is, for example, also possible to use the shaping elements for other embodiments of spacing elements. The shaping elements can also have any desired shape. The shape is not limited to cylinders.

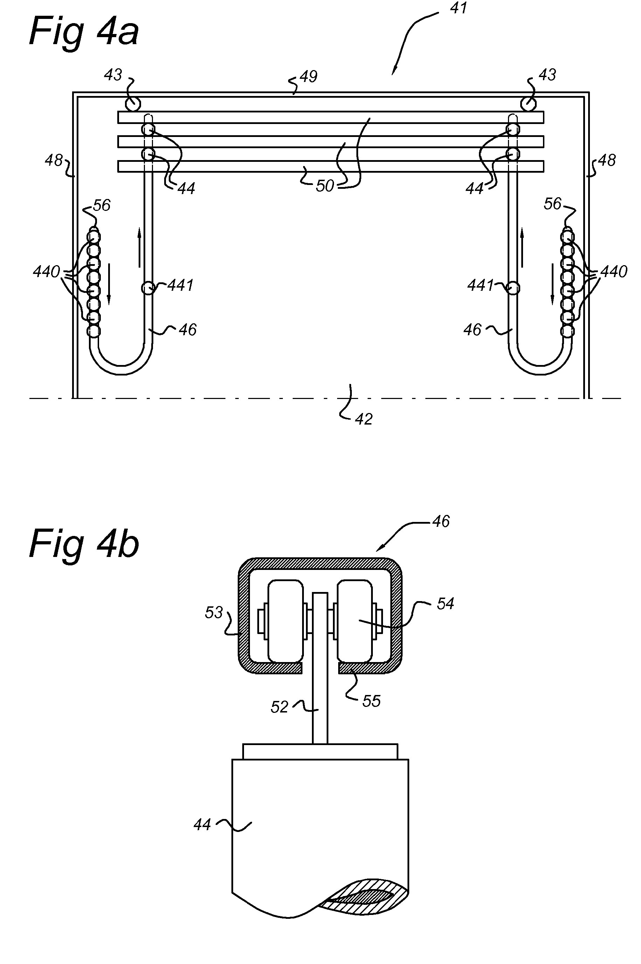

Fig. 4a shows a top view of an embodiment of the device 41, which is particularly suited for fixing relatively large objects. The objects may, for example, be relatively thin, rectangular or square objects, such as for example doors and the like. The device comprises a rear wall 49 and two side walls 48. The rear wall ensures that relatively large objects are securely supported and, in combination with the side walls, also provides protection. The carrier is formed by a bottom 42 of the device. The bottom 42, rear wall 49 and side walls 48 may form part of a cargo space of a vehicle, such as for example a lorry. However, other uses are also conceivable. Two first supporting members 43 are positioned near the rear wall. An object can be placed against the first supporting member 43. In an alternative embodiment, the rear wall may serve as a supporting member. The device 41 comprises two rail systems 46 which are arranged at a distance from one another and in which the spacing elements 44 are displaceably accommodated. The spacing elements can be used to create intermediate spaces in which objects 50 can be accommodated.

A detail of the rail system 46 from Fig. 4a can be seen in Fig. 4b. This figure shows that the spacing element 44 is held in the rail system 46 in a suspended manner. Suspending the spacing elements ensures that relatively large, square or rectangular objects can be fixed in a relatively simple manner. Alternatively, it is possible to produce a design in which the spacing elements are standing upright, using a rail system which is placed in the bottom 42. The rail system 46 comprises a profiled section 53. The profiled section has two running surfaces 55 with a groove in between. The spacing element 44 is provided with a carrier 52. The carrier 52 is provided with a wheel axle provided with wheels 54 at either end. The wheels are placed on the running surfaces 55 and can thus be displaced along the longitudinal direction of the rail system 46.

As can be seen in Fig. 4a, the rail system 46 also comprises a U-shaped track. One track section 56 of the rail system 46 is placed near the side wall 48 of the device. The track section 56 runs substantially parallel to the side wall 48 and serves as a store for spacing elements 440. In this manner, spacing elements which are not required can be stored away. If a spacing element 440 is required, it can easily be removed from the store.

The device 41 operates analogously to the devices described above. An object can be placed against the first supporting member 43, after which a spacing element can be placed against the object. Subsequently, a further object 50 can be placed against the spacing element. Depending on the number of objects, a further spacing element 441 can be removed from the store and be placed against the object. When the last object has been placed, the assembly can be fixed using a second supporting member (not shown). The second supporting member can be designed in various ways. The supporting member may be a relatively rigid part, which is displaceably suspended from a rail. A fixing unit can be used to counter the displaceability of the supporting member in order thus to fix the last supporting member. Of course, it is also possible to design the last supporting member differently.

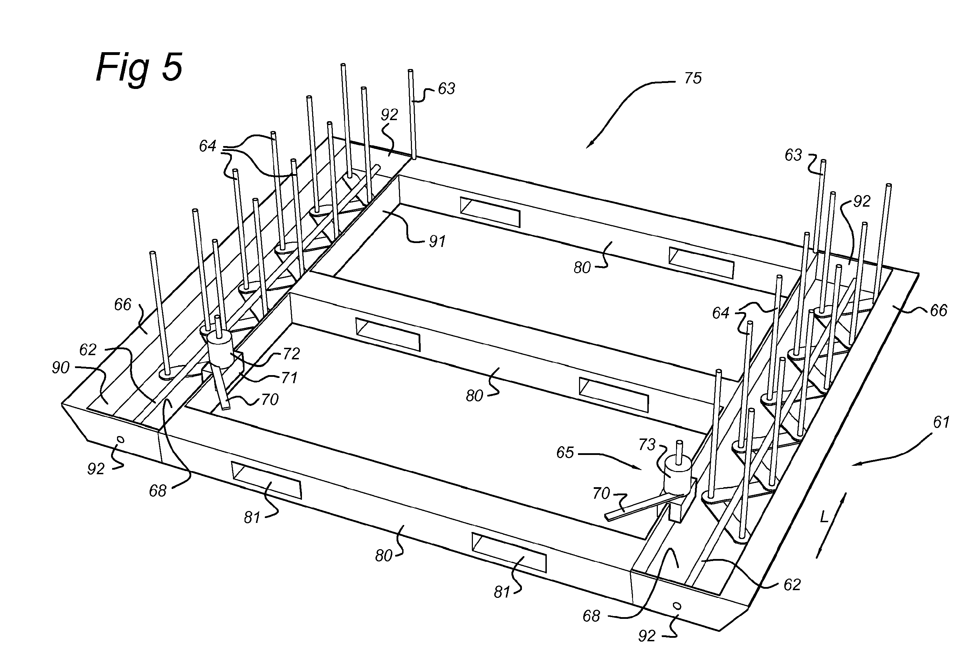

Fig. 5 shows another embodiment of the device 61. In this embodiment, the device 61 is designed as a pallet. The device comprises two carriers 68, arranged at a distance from one another, which are connected to one another by three cross beams 80. On the underside of the cross beams 80, receiving spaces 81 are provided. The receiving spaces 81 are matched to the dimensions of, for example, the fork of a fork-lift truck. In this way, the device can be transported by a fork-lift truck in a simple manner.

Of course, the embodiment with receiving spaces for a transport vehicle can also be used for other embodiments of the device. This application is, for example, also suitable for use with the device as illustrated in Fig. 4, in which side and rear walls are used.

Fig. 5 also shows a detail of a fixing system 75 according to an embodiment of the invention. The fixing system comprises a bottom 68 which is provided on both sides with side walls 90, 91. A bearing surface 66 for objects is provided on the top side of the outer wall 90. Near one end of the carrier 68, a first supporting member 63 is provided on a side wall 92 of the fixing system 75. In the space which is enclosed by the bottom 68 and the side walls 90, 91, 92, an accordion coupling system with spacing elements 64 is provided. The accordion coupling system has already been described with reference to Fig. 2 and Fig. 3. The accordion coupling system is surrounded in the space by the bottom 68 and the side walls 90, 91 held by an attachment means 62. In this embodiment, the attachment means is an elongate rod 62 which connects the two short side walls to one another in the longitudinal direction L of the device. The accordion coupling system is arranged largely between the bottom 68 and the attachment means 62. Thus, the accordion coupling system is held in place. Alternatively, it is also possible for the bottom 68 to be provided with a groove into which the spacing elements can be pushed. It is, for example, possible to design a spacing element having a base part which extends substantially at right angles to the spacing element. The base part is provided on its underside with a sliding part which can be accommodated in the groove. An attachment means may be provided, such as for example a knob, on the underside of the sliding part. The knob ensures that the spacing means cannot readily be removed from the groove, and thus keeps the spacing means connected to the device. In spite of this, the spacing means can be displaced in the device. The displacement will take place substantially parallel to the plane of the carrier.

A last supporting member 65 is arranged displaceably on top of an inner wall 91 of the device 61 from Fig. 5. The supporting member can move along the longitudinal direction L of the device. In this case, the supporting member slides over the inner wall 91 by means of a guide 71. The last supporting member 65 comprises a central section 73 around which a stop part 72, such as a reel, is arranged. A fixing unit is provided on the supporting member 65. The fixing unit comprises a lever 70 by means of which the fixing unit can be brought into an operating position. In an operating position, the displacement of the supporting member 65 is prevented. By means thereof, the distance between the first supporting member and the last supporting member can be fixed and the objects can be fixed on the device.

It will be clear to those skilled in the art that the device can also be designed differently. The embodiments illustrated in the various figures are interchangeable. It is, for example, also possible to design both supporting members so as to be displaceable, such that the objects can be fixed from two sides. Such embodiments are readily conceivable without departing from the protection laid down in the claims.

## Claims

1. Device for fixing objects with respect to one another, comprising a carrier with a bearing surface, in which the carrier is configured such that the objects can be arranged thereon in a row, in which the device is also provided with a fixing system provided with:
• a first supporting member for placing a first object against;
• a last supporting member, positioned at a distance from the first supporting member, for placing a last object against;
• a number of spacing elements which can be positioned between the first and the last supporting member, in which the spacing elements can be displaced with respect to one another and with respect to the carrier in a direction of displacement parallel to the bearing surface in order to form a number of intermediate spaces on the carrier, in which the objects can be accommodated in the intermediate spaces, and in which the spacing element is configured such that it prevents damage to the objects during use of the device;
• a fixing unit for fixing the distance between the first and the last supporting member.

2. Device according to Claim 1, in which the spacing elements are coupled to one another.

3. Device according to Claim 2, in which the spacing elements are substantially coupled so as to be displaceable only in the direction of displacement.

4. Device according to Claim 2 or 3, in which an accordion coupling system is provided for coupling the spacing elements to one another.

5. Device according to Claim 4, in which the spacing element is, on its underside, connected to an elongate base, which extends substantially at right angles to the spacing element, in which a receiving space is provided near a first end of the base, and in which, near a second end which is situated opposite the first end, a coupling element is provided which is configured to cooperate with the receiving space of an adjacent spacing element in order to couple the spacing elements to one another, and thus to form the accordion coupling system.

6. Device according to one of the preceding claims, in which the device comprises a substantially rectangular holder with a bottom and peripheral walls, in which the carrier and the bearing surface are formed, at least partially, by an upper side of the peripheral walls, with the first supporting member being provided near a short side of the rectangular holder, in which the second supporting member can be displaced along a long side of the holder and is provided with the fixing unit for fixing the distance between the first and the last supporting member, and in which the number of spacing elements is displaceably accommodated in a space which is surrounded by the bottom and peripheral walls.

7. Device according to one of the preceding claims, in which a further fixing system is provided which is arranged at a distance from the first fixing system.

8. Device according to Claim 7, in which the further fixing system is arranged in such a manner that the direction of displacement of the spacing elements of the further fixing system is substantially parallel to the direction of displacement of the spacing elements of the first fixing system.

9. Device according to one of the preceding claims, in which the spacing element comprises at least one shaping element for modifying the shape of the spacing element to the object to be fixed.

10. Device according to Claim 9, in which the shaping element is detachable from the spacing element.

11. Device according to one of the preceding claims, in which the spacing elements are displaceable in the longitudinal direction of the carrier.

12. Device according to one of the preceding claims, in which the spacing element is provided with a chassis fitted with at least one wheel, in which the chassis is displaceably accommodated in a guide element comprising at least one running surface for guiding the wheel therein.

13. Device according to Claim 12, provided with attachment means for attaching the guide element to a ceiling part, and in which the spacing element is suspended from the chassis.

14. Device according to one of the preceding claims, in which the device is provided with a storage space for temporarily storing the spacing elements therein.

15. Device according to one of the preceding claims, in which the device is provided on its underside with at least one receiving space for accommodating carrying elements of a transport vehicle, such as a fork-lift truck.

16. Device according to one of the preceding claims, in which the bearing surface extends substantially horizontally.

17. Use of a device according to one of Claims 1-16.

18. Vehicle for transporting a number of objects, comprising one or more devices according to one of Claims 1-16.

19. Vehicle according to Claim 18, in which at least one device is positioned in a cargo space of the vehicle.

20. Method for fixing at least two objects using a device according to one of Claims 1-16, in which the method comprises the following steps:
• displacing at least one first spacing element in such a manner that a first intermediate space is created between the first supporting member and the first spacing element, with the distance between the first spacing element and the first supporting member being chosen such that a first object can be accommodated in the first intermediate space;
• placing the first object in the first intermediate space, with the object being arranged so as to bear against the first supporting member;
• reducing the distance between the first spacing element and the first supporting member in such a manner that the first spacing element is arranged so as to bear against the object;
• forming a last intermediate space between the last supporting member and a last spacing element, with the distance between the last supporting member and the last spacing element being chosen such that a last object can be accommodated in the last intermediate space;
• placing the last object in the last intermediate space, with the last object being arranged so as to bear against the last spacing element;
• reducing the distance between the last supporting member and the last spacing element in such a manner that the last supporting member is arranged so as to bear against the object;
• fixing the distance between the last supporting member and the first supporting member for fixing the objects.

21. Method according to Claim 20, in which the first spacing element also serves as the last spacing element and in which the method is used for fixing two objects.

22. Method according to Claim 20, in which the method comprises the following additional steps before the step of forming a last intermediate space:
• forming at least one additional intermediate space between the first intermediate space and the last intermediate space by arranging two spacing elements at a distance from one another;
• placing an additional object in the at least one additional intermediate space, with the additional object being arranged so as to bear against one of the two spacing elements;
• reducing the distance between the two spacing elements in such a manner that the spacing elements are arranged so as to bear against the object.
